# EUROPÄISCHE PATENTSCHRIFT

(11) **EP 1 209 052 B1**
(45) Veröffentlichungstag und Bekanntmachung des Hinweises auf die Patenterteilung: **21.07.2004**
(21) Anmeldenummer: 01126907.3
(22) Anmeldetag: 13.11.2001
(51) Int. Cl.: B60T 7/12, B60T 17/22, B60T 17/20

(54) **Entgleisungsdetektor für Schienenfahrzeuge**
Derailment detecting device for railway vehicles
Détecteur de déraillement pour véhicules ferroviaires

(30) Priorität: 24.11.2000 DE 10058306
(43) Veröffentlichungstag der Anmeldung: 29.05.2002
(73) Patentinhaber: KNORR-BREMSE Systeme für Schienenfahrzeuge GmbH, 80809 München (DE)
(72) Erfinder: Epp, Nikolaus, 8050 Zürich (CH)
(74) Vertreter: Seemann, Ralph, Dr. Dipl.-Phys.

(56) Entgegenhaltungen:
- EP-A- 0 699 567
- DE-A- 1 455 299
- DE-A- 19 544 122

## Beschreibung

Die Erfindung betrifft eine Notbremseinrichtung zur Auslösung einer Druckluftbremsanlage bei Fahrzeugen, insbesondere Schienenfahrzeugen, umfassend ein mit einer Hauptluftleitung des Schienenfahrzeuges verbundenes Notbremsventil und einen Entgleisungsdetektor, der derart mit dem Notbremsventil gekoppelt ist, daß im Entgleisungsfall über das Notbremsventil die Hauptluftleitung entlüftbar ist.

Beim Betrieb von Schienenfahrzeugen, insbesondere von schweren Güterzügen, kann es vorkommen, daß ein Fahrzeugrad entgleist, ohne daß dies sofort bemerkt wird. Um den entstehenden, meist erheblichen Schaden am Gleisbett und am Fahrzeug zu verhindern oder niedrig zu halten, kommen Entgleisungsdetektoren zur Anwendung, die durch die Einwirkung auf die Druckbremsanlage automatische Schnellbremsungen ermöglichen.

In der DE 195 44 122 wird ein Entgleisungsdetektor beschrieben, bei dem ein Entgleisungsdetektor und ein Notbremsventil in einem Notbremsblock miteinander vereint sind, wobei ein Auslösemechanismus des Entgleisungsdetektors mit einem Entlüftungsventilmechanismus des Notbremsventils in Wirkverbindung steht.

Das Dokument EP-A-0699527 offenbart ebenfalls einen Entgleisungsdetektor.

Eine Entgleisung wird festgestellt, indem eine träge Masse als Trägheitssensor fungiert. Ein in vertikaler Richtung verschiebbarer Gewichtskörper fungiert dabei als Trägheitssensor, der während der Fahrt die vertikal auf das Fahrzeug einwirkenden Stöße überwacht. Bei normalen Stößen bleibt dieser Trägheitssensor inaktiv, bei außergewöhnlich starken Erschütterungen, wie sie bei Entgleisungen auftreten, bewegt er sich aus einer Ruheposition und öffnet mittels der Kopplung an ein Notbremsventil die Hauptluftleitung der Druckbremsanlange, so daß eine Schnellbremsung ausgeführt wird.

Nachdem die Erschütterung vorbei ist, bewegt sich dieser Trägheitssensor wieder in seine Ruheposition und das Notbremsventil wird geschlossen, so daß sich in der Hauptluftleitung wieder ein Druck aufbauen kann. Ein Ansprechen des Entgleisungsdetektors wird beispielsweise durch Anzeigemittel in Form von Stiften registriert. Die Stifte werden beim Entlüften aus einer Normalposition in eine Entgleisungsdetektionsposition gepreßt, aus der sie nur manuell zurück bewegt werden können.

Beim Rangierbetrieb treten jedoch besonders häufig Stöße auf, die den Entgleisungsdetektor ansprechen lassen, insbesondere beim Aufprall rollender Wagen auf stehende Wagen. Eine Notbremsung, bei der der Entgleisungsdetektor manuell zurückgestellt werden muß, ist hier nicht erforderlich bzw. nicht erwünscht. Gebremst wird beim Rangieren mittels Gleisbremsen oder mittels Hemmschuh oder einer Handbremse. Eine automatische Rückstellung oder ein selbständiges Schließen des Notbremsventils kann unter anderen Umständen jedoch auch ein Gefahrenpotential darstellen.

Davon ausgehend ergibt sich als Aufgabe der Erfindung, eine Notbremseinrichtung anzugeben, die ein selbständiges Rückstellen des Entgleisungsdetektors nach einem Entgleisungsfall verhindert. Es soll außerdem möglich sein, eine Notbremsung in Abhängigkeit des Hauptluftleitungsdrucks und anderer relevanter Bedingungen auszuführen oder zu verhindern, daß eine Notbremsung erfolgt, wenn diese an sich gar nicht notwendig wäre.

Die Aufgabe wird erfindungsgemäß mit einer Notbremseinrichtung zur Auslösung einer Druckluftbremsanlage bei Fahrzeugen, insbesondere Schienenfahrzeugen, umfassend ein mit einer Hauptluftleitung des Schienenfahrzeugs verbundenes Notbremsventil, einen Entgleisungsdetektor, der derart mit dem Notbremsventil gekoppelt ist, daß im Entgleisungsfall über das Notbremsventil die Hauptluftleitung entlüftbar ist, dadurch gelöst, daß auf den Entgleisungsdetektor eine Haltevorrichtung einwirkt, die ein selbsttätiges Schließen des Notbremsventils nach dem Entlüften verhindert, und daß ein Steuerelement zur Freigabe der Haltevorrichtung im Entgleisungsfall vorgesehen ist.

Vorzugsweise ist die Hauptluftleitung großquerschnittig entlüftbar.

Die Notbremseinrichtung dient der Auslösung einer Schnellbremsung bei Fahrzeugen, insbesondere Schienenfahrzeugen mit einer Druckluftbremsanlage. Dabei wirkt im Entgleisungsfall ein Entgleisungsdetektor auf ein mit der Hauptluftleitung verbundenes Notbremsventil ein. Durch dieses Einwirken wird das Notbremsventil schnell und vorzugsweise großquerschnittig geöffnet, so daß die Druckluft aus der Hauptluftleitung der Bremsanlage in die Atmosphäre entweichen kann und alle mit dieser Druckbremsanlage verbundenen Bremsen an den Waggons des Fahrzeuges schnell abgebremst werden. Der Entgleisungsdetektor ist dabei von einer Haltevorrichtung beeinflußbar. Diese Haltevorrichtung wirkt auf den Entgleisungsdetektor derart ein, daß sich nach einem Entlüften der Hauptluftdruckleitung das Notbremsventil nicht selbständig schließt. Ohne diese Haltevorrichtung geht ein zur Detektion verwendeter Trägheitssensor wieder in seine Ruheposition zurück und schließt dabei das Notbremsventil.

Schienenfahrzeuge werden unter unterschiedlichen Bedingungen bewegt. Der Beladungszustand und die Geschwindigkeit, mit der Schienenfahrzeuge bewegt werden, sollten vorzugsweise für die Detektion von Entgleisungen berücksichtigt werden.

Im Rangierbetrieb wird die Druckbremsanlage nicht mit dem selben Druck betrieben, wie bei hohen Geschwindigkeiten. Üblicherweise ist der Druck gleich dem atmosphärischen Druck.

Die Haltevorrichtung ist vorzugsweise derart ausgeführt, daß die Haltefunktion derselben erst ab Erreichen einstellbarer Bedingungen ermöglicht ist, d.h. sie wird erst unter festzulegenden Bedingungen ein selbständiges Rückstellen beispielsweise des Notbremsventil verhindern, beispielsweise vorzugsweise erst wenn ein bestimmter Druck in der Hauptluftleitung vorherrscht oder wenn eine gewisse Geschwindigkeit überschritten wird.

In einer vorteilhaften Ausgestaltung der Erfindung weist der Entgleisungsdetektor einen als Trägheitssensor fungierenden Masseschwinger auf. Dieser Masseschwinger wird in seiner Ruheposition beispielsweise von einer Feder gehalten. Im Entgleisungsfall wird der Masseschwinger aus der Ruheposition nach unten bewegt. An seinem Rand weist der Masseschwinger eine Rastvorrichtung auf, die ein Einrasten des zur Haltevorrichtung gehörenden Halteelements ermöglicht. Durch das Einrasten des Halteelements wird der Masseschwinger daran gehindert, in seine Ruheposition zurückzukehren, mit der Folge, daß das mit dem Masseschwinger gekoppelte Notbremsventil nicht wieder geschlossen wird. Dies hat den Vorteil, daß bei einer Entgleisung eine Person das Halteelement aus der Rastvorrichtung herausziehen muß und erst so eine manuelle Rückstellung der Notbremseinrichtung ermöglicht wird, um vorzugsweise ein weiteres Fahren des Zuges zu verhindern. Durch diese Maßnahme können Beschädigungen am Schienenfahrzeug und den Gleisanlagen verhindert werden.

Da im Rangierbetrieb häufiger Stöße auftreten, als im Streckenbetrieb, die den Entgleisungsdetektor ansprechen lassen, ist ein ständiges manuelles Rückstellen zeitaufwendig und nicht immer notwendig. Um derartige Bedingungen zu berücksichtigen, ist vorteilhafterweise ein Steuerelement vorgesehen, das in Abhängigkeit vom Hauptluftleitungsdruck und/oder der Geschwindigkeit das Halteelement der Haltevorrichtung freigibt. Im Rangierbetrieb hält das Steuerelement das Halteelement, daß beispielsweise vorzugsweise durch einen von einer Feder gegen den Masseschwinger gepreßten Kolben gebildet wird, zurück, so daß bei Stößen, die durch den Rangierbetrieb erfolgen, das Halteelement nicht in die Rastvorrichtung am Masseschwinger einrasten kann.

Das Steuerelement ist in einer vorteilhaften Ausgestaltung durch einen Kolben realisiert, der auf das Halteelement einwirkt. Mit steigendem Druck hebt sich der Kolben und gibt nach Überschreiten eines Schwellwertes das Halteelement frei, wodurch nach dem Entlüften im Entgleisungsfall ein Einrasten des Halteelements möglich ist. Eine Berücksichtigung der Geschwindigkeit erfolgt in der Weise, daß dieser Kolben zusätzlich mittels eines elektrisch steuerbaren Aktuators, solange in seiner das Halteelement blockierenden Stellung gehalten wird, bis ein Geschwindigkeitsschwellwert überschritten wird und der Aktuator den Kolben des Steuerelements freigibt, so daß dieser bei entsprechendem Druck in der Hauptluftleitung das Halteelement zur Verhinderung der selbständigen Rückstellung der Notbremseinrichtung freigeben kann.

In einer weiteren vorteilhaften Ausgestaltung sind am Masseschwinger mehrere Rastvorrichtung mit unterschiedlicher Tiefe vorgesehen. Mittels dieser abgestuften Rastvorrichtung können Entgleisungen und/oder Flachstellen an Schienenfahrzeugrädem detektiert werden. So ist bei einem nichtselbständigen Rückstellen der Notbremseinrichtung die Möglichkeit gegeben, zu erkennen, ob ein Ansprechen des Entgleisungsdetektors auf eine wirkliche Entgleisung zurückzuführen ist, oder auf eine Flachstelle am Schienenfahrzeugrad zurückzuführen ist, da der Masseschwinger auf diese beiden Arten von Stößen mit unterschiedlich starken Vertikalbewegungen reagiert.

Vorzugsweise sind die Rastnuten in dem Masseschwinger so ausgestaltet, daß in die Richtung, in die sich der Masseschwinger bewegt, ein Herausrutschen des Rastelements möglich ist und in die Richtung zur Ruheposition des Masseschwingers ein Herausrutschen verhindert wird und nur durch eine Bedienperson möglich ist.

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im übrigen bzgl. der Offenbarung aller im Text nicht näher erläuterten erfindungsgemäßen Einzelheiten ausdrücklich verwiesen wird. Es zeigen:
- Fig. 1: eine schematische Darstellung eines Notbremsventils mit Entgleisungsdetektor mit nichtselbständiger Rückstellung,
- Fig. 2: eine schematische Darstellung einer steuerbaren Haltevorrichtung, und
- Fig. 3: eine schematische Darstellung eines Hauptluft abhängigen oder Betriebsdruck abhängigen Entgleisungsdetektors mit Klinke.

In den Figuren und der folgenden Figurenbeschreibung sind gleiche Elemente mit denselben Bezugszeichen bezeichnet, so daß von einer erneuten Vorstellung jeweils entsprechend abgesehen wird.

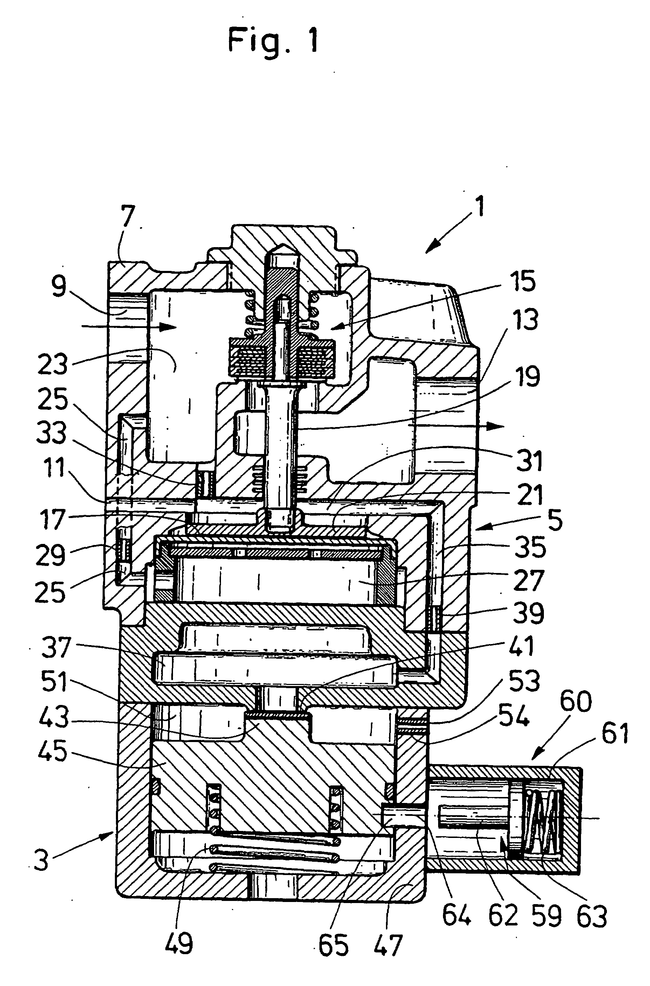

Figur 1 zeigt ein Notbremsventil 1 mit einem Entgleisungsdetektor 3 mit nichtselbständiger Rückstellung. Das Notbremsventil 1 besteht aus einem Gehäuse 7 mit einem Hauptluftleitungsanschluß 9, einem Steueranschluß 11, einem Entlüftungsanschluß 13, einem zwischen Hauptluftleitungsanschluß 9 und Entlüftungsanschluß 13 wirkenden, federverspannten Ventil 15 und einem das Ventil 15 druckabhängig betätigenden, in Wirkverbindung mit einer Membrane 17 stehenden Stößel 19. Der Stößel 19 ist an seinem unteren Ende mit einem Ventilteller 21 verbunden, welcher auf der Membrane 17 aufliegt. Eine den Hauptluftleitungsdruck des Schienenfahrzeuges führende Kammer 23 im Gehäuse 7 ist mittels einer Leitung 25 an die unterhalb der Membrane 17 bestehende Kammer 27 angeschlossen; in der Leitung 25 ist eine Düse 29 vorgesehen. Die mit dem Steueranschluß 11 verbundene Kammer 31 oberhalb des Ventiltellers 21 ist über eine Düse 33 an die Kammer angeschlossen. Die Kammer 31 ist ferner über einen Kanal 35 mit einer Kammer 37 verbunden, wobei in der Verbindung vorzugsweise eine Düse 39 vorgesehen ist. Die Kammer 37 ist an ihrer gemäß Darstellung unteren Seite mit einem Ventilsitz 41 versehen, gegenüber welchem ein als Ventilkörper 43 ausgebildeter Fortsatz eines Masseschwingers 45 wirkt. Der in an sich bekannter Weise als Trägheitssensor wirkende Masseschwinger 45 ist an seinem Außenumfang gegenüber dem ihn aufnehmenden Gehäuse 47 abgedichtet und ist mittels einer Feder 49 in Richtung des Ventilsitzes 41 verspannt.

Der an der Unterseite des Masseschwingers 45 bestehende Raum ist mit der Außenluft verbunden, desgleichen die oberhalb des Masseschwingers 45 bestehende Kammer 51, welche über einen eine Düse 53 aufweisenden Auslaß 54 mit Außenluft in Verbindung ist. Der nach dem Trägheitsprinzip wirkende Masseschwinger 45 bildet in seiner nachfolgend beschriebenen funktionellen Zuordnung zu der den Steuerdruck führenden Kammer 37 den Entgleisungsdetektor 3, welcher dem in der Darstellung darüber befindlichen Notbremsventil in Form des Notbremsblocks 5 zugeordnet ist.

an den Entgleisungsdetektor 3 ist eine Haltevorrichtung 60 gekoppelt. Diese Haltevorrichtung 60 weist ein Gehäuse 61 auf, in dem ein Halteelement 59 angeordnet ist, welches einen Kolben 62 und eine mit dem Kolben 62 verspannten Feder 63 umfaßt. Das den Entgleisungsdetektor aufnehmende Gehäuse 47 weist einen Durchbruch 64 auf, wobei der Durchbruch 64 so bemessen ist, daß der Kolben 62 in diesen Durchbruch 64 eingeführt werden kann. Weiterhin weist der Masseschwinger 45 eine Rastvorrichtung 65 auf, die in Form einer Nut ausgebildet sein kann. Durch ein nicht dargestelltes Gestänge an der Haltevorrichtung 60 läßt sich der Kolben 62 des Halteelements 59 nach einem Einrasten manuell zurückziehen.

Nachfolgend wird die Funktion des Notbremsventils 1, des Entgleisungsdetektors 3 und der Haltevorrichtung 60 beschrieben. Beim Auffüllen der nicht dargestellten Hauptluftleitung wird das Notbremsventil 1 über den Hauptluftleitungsanschluß 9 mit Druckluft beaufschlagt, d.h. durch die Düse 33 erhalten die Kammer 31 und der Steueranschluß 11 Druckluft. Da die Kammer 31 durch den Kanal 35 und die Düse 39 mit der Kammer 37 verbunden ist, steht in der Kammer 37 in gleicher Weise Steuerleitungsdruck an. Mittels der Verbindung durch die Leitung 25 und die Düse 29 gelangt Druckluft aus der Hauptluftleitung auch in die Kammer 27. Nach dem Auffüllen der Kammern 27, 31, 37 ist der Notbremsblock 5 betriebsbereit. Bei einer normalen Notbremsbetätigung durch Personen mit Hilfe der Notbremsauslöser in den Waggons wird der Steuerleitungsdruck in der Steuerleitung 11 schlagartig abgesenkt. Dadurch entsteht zwischen der Kammer 31 und der Kammer 27 ein Differenzdruck, welcher die Membrane 17 und den Ventilteller 21 mit dem Stößel 19 nach oben drückt, derart, daß das Ventil 15 großquerschnittig geöffnet wird, der Hauptluftleitungsdruck entweicht über das Ventil 15 in Richtung des Entlüftungsanschlusses 13. Die Notbremsung wird dadurch eingeleitet.

Eine Notbremsung kann auch durch den Entgleisungsdetektor ausgelöst werden. Durch die bei einem Rad- oder Achsenbruch auftretende Beschleunigung oder die' bei einer Entgleisung auftretende Beschleunigung wird der Masseschwinger 45 nach unten gegen die Kraft der Feder 49 beschleunigt, wodurch sich der Ventilkörper 43 vom Ventilsitz 41 abhebt und die Kammer 37 gesteuert über die Düse 53 im Auslaß 54 entlüftet wird. Der Druckabbau pflanzt sich durch den Kanal 35 in Richtung des Steueranschlusses 11 fort, so daß wiederum ein Differenzdruck entsteht und als Folge das Ventil 15 und die Hauptluftleitung zum Zwecke einer Notbremsung entlüftet wird. Durch die erfindungsgemäße Haltevorrichtung wird der Masseschwinger 45 bei seiner auf Grund der hohen Beschleunigung auftretenden Vertikalbewegung durch das Einrasten des Kolbens 62 in die Rastvorrichtung 65 gestoppt. Ein automatischen Rücksetzen der Notbremseinrichtung ist damit verhindert. Das Halteelement 59 muß in diesem Ausführungsbeispiel manuell zurückgesetzt werden. Dies hat den Vorteil, daß jegliche zu hohe Beschleunigung und die entsprechende Auswirkung am Waggon oder Gleisbett von einer Person überprüft werden muß, indem das Rücksetzen des Halteelements 59 am Ort der Detektion vorgenommen werden muß und nicht automatisch passiert. Da diese manuelle Rücksetzung speziell im Rangierbetrieb nicht zweckdienlich ist, ist vorzugsweise eine steuerbare Haltevorrichtung vorgesehen oder vorgesehen, daß erst ab einem Mindestluftdruck in der Hauptluftleitung die Haltevorrichtung in Betrieb gesetzt werden kann, so daß erst bei Überschreiten dieses Drucks der Kolben 62 in die Rastvorrichtung 65 einrastet. Hierzu ist beispielsweise eine Vorrichtung vorgesehen, mittels der die Haltevorrichtung bzw. der Kolben 62 in einer Position eingerastet ist, so daß der Kolben 62 nicht in die Rastvorrichtung 65 einrasten kann, wobei diese Vorrichtung beispielsweise eine Feder umfaßt und einen Teller, der mit dem Betriebsdruck gegen die Feder drückt. Erst ab Überschreiten eines Mindestdrucks, der durch beispielsweise Verstellen der Federkonstanten vorgebbar ist, löst diese Vorrichtung aus, so daß erst dann das Einrasten der Haltevorrichtung in die Rastvorrichtung 65 möglich wird.

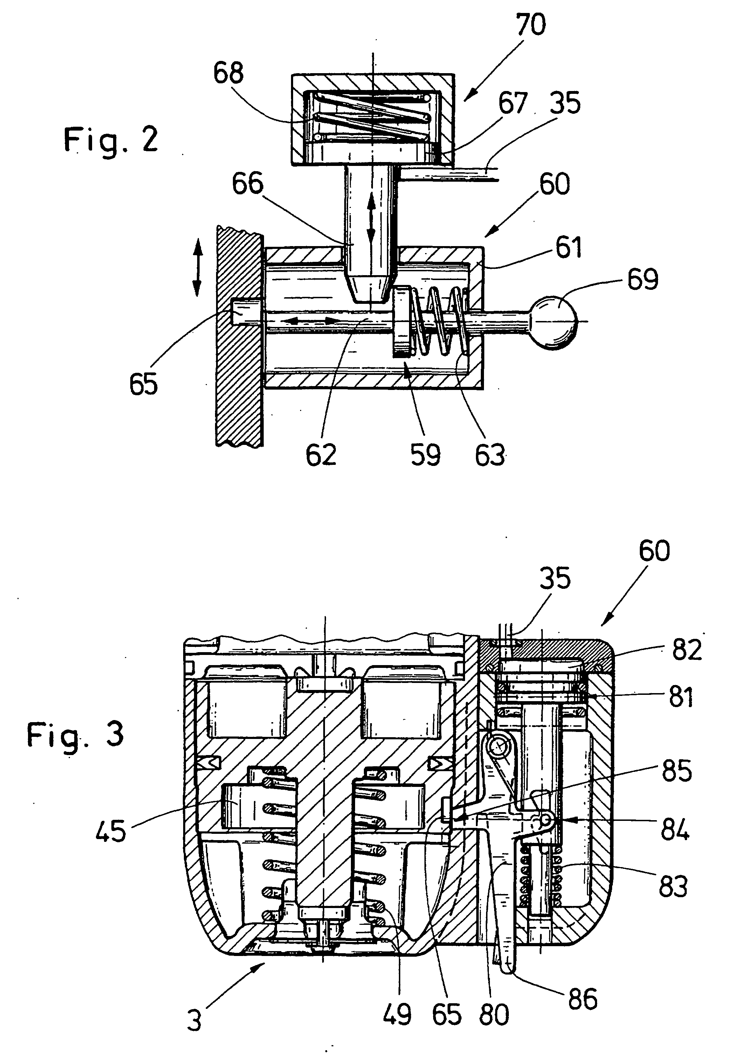

Figur 2 zeigt die steuerbare Haltevorrichtung 60. Der Entgleisungsdetektor ist nur partiell dargestellt. Der Kolben 62 der von der Feder 63 getrieben wird, wird hier gegen ein Gestänge 66 des Steuerelements 70 gepreßt, so daß das Halteelement 59 nicht gegen den Rand des Masseschwingers 45 gepreßt wird und im Entgleisungsfall bei Abwärtsbewegung des Masseschwingers 45 nicht in die Rastvorrichtung 65 einrasten kann und somit ein selbständiges Rückstellen des hier nicht dargestellten Ventils 15 verhindern kann. Dem Steuerelement 70 wird über die Steuerleitung 35 der Druck in der Hauptluftleitung zugeführt. Das Gestänge 66 wird bei steigendem Druck in der Hauptluftleitung mittels eines Kolbens 67 nach oben geführt. Bei fehlendem Druck wird das Gestänge 66 durch die Feder 68 nach unten gepreßt, so daß ein Anpressen und Einrasten des Halteelements 59 an den Masseschwinger 45 und in die Rastvorrichtung 65 verhindert wird. Ein Auslösehebel 69 dient der manuellen Rückstellung des Kolbens 62. Der Freigabewert wird dabei durch die Größen Hauptleitungsdruck, Kolbendurchmesser, sowie Federkraft bestimmt.

Figur 3 zeigt einen hauptluftabhängigen Entgleisungsdetektor 3 mit Klinke. Die Haltevorrichtung 60 ist hier mit einer Klinke 80 als Halteelement 59 ausgeführt. Der Kolben 81 wird bei entsprechendem Druck in der Hauptluftleitung, die über die Steuerleitung 35 mit der Kammer 82 verbunden ist, nach unten gedrückt. Eine Kolbenrückstellfeder 83 drückt den Kolben 81 bei weniger Druck wieder nach oben. Über das Gestänge 84 ist dieser Kolben 81 als Steuerelement mit der Klinke 80 verbunden. Die Klinke 80 weist eine Kolbenraste 85 auf, die in die Rastvorrichtung 65 des Masseschwingers 45 eingreift, wenn der Masseschwinger 45 nach unten bewegt wird. Außerdem ist die Klinke 80 mit einem Klinkenarm 86 ausgestattet, der eine manuelle Auslösung ermöglicht, wodurch die Kolbenraste 85 aus der Rastvorrichtung 65 herausgedrückt wird und der Masseschwinger 45 wieder in seine Ruheposition zurückkehren kann. Erst wenn der entsprechende Druck in der Hauptluftleitung vorherrscht, kann die Klinke 80 in die Rastvorrichtung 65 eingreifen.

### Bezugszeichenliste

- 1: Notbremsventil
- 3: Entgleisungsdetektor
- 5: Notbremsblock
- 7: Gehäuse
- 9: Hauptluftleitungsanschluß
- 11: Steueranschluß
- 13: Entlüftungsanschluß
- 15: Ventil
- 17: Membrane
- 19: Stößel
- 21: Ventilteller
- 23: Kammer
- 25: Leitung
- 27: Kammer
- 29: Düse
- 31: Kammer
- 33: Düse
- 35: Kanal
- 37: Kammer
- 39: Düse
- 41: Ventilsitz
- 43: Ventilkörper
- 45: Masseschwinger
- 47: Gehäuse
- 49: Feder
- 51: Kammer
- 53: Düse
- 54: Auslaß
- 59: Halteelement
- 60: Haltevorrichtung
- 61: Gehäuse
- 62: Kolben
- 63: Feder
- 64: Durchbruch
- 65: Rastvorrichtung
- 66: Gestänge
- 67: Kolben
- 68: Feder
- 69: Auslösehebel
- 70: Steuerelement
- 80: Klinke
- 81: Kolben
- 82: Kammer
- 83: Feder
- 84: Gestänge
- 85: Kolbenraste
- 86: Klinkenarm

## Patentansprüche

1. Notbremseinrichtung zur Auslösung einer Druckluftbremsanlage bei Fahrzeugen, insbesondere Schienenfahrzeugen, umfassend
- ein mit einer Hauptluftleitung des Fahrzeuges verbundenes Notbremsventil (1)
- einen Entgleisungsdetektor (3), der derart mit dem Notbremsventil (1) gekoppelt ist, dass im Entgleisungsfall über das Notbremsventil (1) die Hauptluftleitung entlüftbar ist,
**dadurch gekennzeichnet, dass** eine Haltevorrichtung (60) auf den Entgleisungsdetektor (3) einwirkt, die ein selbsttätiges Schließen des Notbremsventils (1) nach dem Entlüften der Hauptluftleitung verhindert, und dass ein Steuerelement (70) zur Freigabe der Haltevorrichtung (60) im Entgleisungsfall vorgesehen ist.

2. Notbremseinrichtung nach Anspruch 1, **dadurch gekennzeichnet, dass** die Haltevorrichtung (60) in Abhängigkeit des Hauptluftleitungsdrucks aktivierbar ist.

3. Notbremseinrichtung nach einem oder mehreren der Ansprüche 1 oder 2, **dadurch gekennzeichnet, dass** eine Rastvorrichtung (65) an einem Masseschwinger (45) im Entgleisungsfall ein Einrasten eines Halteelements (59) der Haltevorrichtung (60) ermöglicht.

4. Notbremseinrichtung nach Anspruch 3, **dadurch gekennzeichnet, dass** das Halteelement (59) einen von einer Feder (63) gegen den Masseschwinger (45) gepressten Kolben (62) umfasst.

5. Notbremseinrichtung nach einem oder mehreren der Ansprüche 1 bis 4, **dadurch gekennzeichnet, dass** eine Freigabe der Haltevorrichtung (60) in Abhängigkeit der Geschwindigkeit vorgesehen ist.

6. Notbremseinrichtung nach einem oder mehreren der Ansprüche 1 bis 5, **dadurch gekennzeichnet, dass** mittels mehrerer abgestufter Rastvorrichtungen (65) am Masseschwinger (45) Entgleisungen und/oder Flachstellen an Schienenfahrzeugrädern detektierbar sind.

7. Notbremseinrichtung nach einem oder mehreren der Ansprüche 3 bis 6, **dadurch gekennzeichnet, dass** die Haltevorrichtung (60) im Entgleisungsfall eine selbsttätige Rückstellung des Masseschwingers (45) verhindert.

8. Notbremseinrichtung nach Anspruch 7, **dadurch gekennzeichnet, dass** die Haltevorrichtung (60) lösbar ist.

## Claims

1. Emergency brake device for actuating a compressed-air brake system in vehicles, particularly rail vehicles, comprising
- an emergency brake valve (1) connected to a main brake pipe of the vehicle,
- a derailing detector (3) that is coupled to said emergency brake valve (1) in such a way that in the case of derailment said main brake pipe can be emptied via said emergency brake valve (1),
**characterised in that** a holding means (60) acts upon said derailing detector (3), which prevents said emergency brake valve (1) from automatically closing after said main brake pipe has been emptied, and that a control element (70) is provided to release said holding means (60) in the case of derailment.

2. Emergency brake device according to Claim 1, **characterised in that** said holding means (60) is adapted for activation in response to the pressure in said main brake pipe.

3. Emergency brake device according to one or several of the Claims 1 or 2, **characterised in that** a snap-in locking device (65) on a mass oscillator (45) permits locking of a holding element (59) of said holding means (60) in the case of derailment.

4. Emergency brake device according to Claim 3, **characterised in that** said holding element comprises a piston (62) pressed by a spring (63) against said mass oscillator (45).

5. Emergency brake device according to one or several of the Claims 1 to 4, **characterised in that** release of said holding means (60) is provided as a function of the speed.

6. Emergency brake device according to one or several of the Claims 1 to 5, **characterised in that** derailment and/or flats on rail vehicle wheels can be detected by means of a plurality of stepped snap-in locking devices (65) on said mass oscillator (45).

7. Emergency brake device according to one or several of the Claims 3 to 6, **characterised in that** in the case of derailment said holding means (60) prevents said mass oscillator (45) from resetting automatically.

8. Emergency brake device according to Claim 7, **characterised in that** said holding means (60) is adapted to be released.

## Revendications

1. Dispositif de frein de secours à commander un système de frein à air comprimé aux véhicules, en particulier des véhicules sur rails, comprenant
- un robinet du frein de secours (1) raccordé à une conduite générale de frein du véhicule,
- un détecteur de déraillement (3) qui est couplé audit robinet du frein de secours (1) d'une telle façon, qu'au cas de déraillement ladite conduite générale de frein puisse se purger via ledit robinet du frein de secours (1),
**caractérisé en ce qu'**un moyen de retenue (60) agit sur ledit détecteur de déraillement (3), qui empêche la fermeture automatique dudit robinet du frein de secours (1) après la purge de ladite conduite générale de frein, et **en ce qu'**un élément de commande (70) est disposé afin de relâcher ledit moyen de retenue (60) au cas de déraillement.

2. Dispositif de frein de secours selon la revendication 1, **caractérisé en ce que** ledit moyen de retenue (60) est apte à être activé en réponse à la pression régnant dans ladite conduite générale de frein.

3. Dispositif de frein de secours selon une ou plusieurs des revendications 1 ou 2, **caractérisé en ce qu'**un dispositif à crans (65) à un oscillateur à masse (45) permet l'encliquetage d'un élément de retenue (59) dudit moyen de retenue (60) au cas de déraillement.

4. Dispositif de frein de secours selon la revendication 3, **caractérisé en ce que** ledit élément de retenue comprend un piston (62) pressé par un ressort (63) contre ledit oscillateur à masse (45).

5. Dispositif de frein de secours selon une ou plusieurs des revendications 1 à 4, **caractérisé en ce que** le relâchement dudit moyen de retenue (60) est envisagé en fonction de la vitesse.

6. Dispositif de frein de secours selon une ou plusieurs des revendications 1 à 5, **caractérisé en ce que** le déraillement et/ou des plats au véhicule sur rails peuvent être détecté moyennant une pluralité des dispositifs étagés à crans (65) audit oscillateur à masse (45).

7. Dispositif de frein de secours selon une ou plusieurs des revendications 3 à 6, **caractérisé en ce qu'**au cas de déraillement, ledit moyen de retenue (60) empêche le retour automatique dudit oscillateur à masse (45).

8. Dispositif de frein de secours selon la revendication 7, **caractérisé en ce que** ledit moyen de retenue (60) est apte à être relâché.
